# EUROPEAN PATENT APPLICATION

(11) **EP 4 701 090 A1**
(43) Date of publication of application: **25.02.2026**
(21) Application number: 25193196.0
(22) Date of filing: 31.07.2025
(51) Int. Cl.: H04B 7/024, H04B 7/06, H04L 5/00

(54) **METHOD, APPARATUS AND COMPUTER PROGRAM**

(30) Priority: 01.08.2024 GB 202411323
(71) Applicant: Nokia Technologies Oy, 02610 Espoo (FI)
(72) Inventor: CAPORAL DEL BARRIO, Samantha, 9000 Aalborg (DK); HAKOLA, Sami-Jukka, 90540 Oulu (FI); BARACCA, Paolo, 81669 München (DE)
(74) Representative: Richardt Patentanwälte PartG mbB

(57) **Abstract**

There is provided an apparatus, method, and computer program for causing an apparatus to perform: reporting, to a network access node, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

## Description

### FIELD

The present application relates to providing at least one report based on the fulfilment of at least one beam management-related condition.

### BACKGROUND

A communication system can be seen as a facility that enables communication sessions between two or more entities such as user terminals, base stations and/or other nodes by providing carriers between the various entities involved in the communications session. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (Universal Mobile Telecommunications Service terrestrial radio access network (e.g., 3G radio)). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

### SUMMARY

According to a first aspect, there is provided an apparatus, the apparatus comprising means for: reporting, to a network access node, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

According to a second aspect, there is provided an apparatus, the apparatus comprising: at least one processor; and at least one memory comprising code that, when executed by the at least one processor, causes the apparatus to perform: reporting, to a network access node, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

According to an third aspect, there is provided a method for an apparatus, the method comprising: reporting, to a network access node, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

According to a fourth aspect, there is provided an apparatus, the apparatus comprising: reporting circuitry for reporting, to a network access node, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

The following applies in respect of any (e.g., one or more) of the above first to fourth aspects.

The apparatus may further be caused to perform: obtaining, from the network access node, a configuration for event-based reporting, wherein the configuration comprises the at least one beam management-related condition.

**The** configuration may further comprise an indication of information that is to be comprised in the report.

The indication of information that is to be comprised in the report may indicate that at least one of the following is to be comprised in the report: information corresponding to L beams and/or beam pairs; an indication indicating whether, for each of L beams and/or beam pairs, a spatial division multiplexing mode of communication and/or a signal frequency network mode of communication is preferred by the apparatus; an indication of whether the L beams and/or beam pairs are for uplink and/or downlink; or an indication of specific beam identifiers for L beams and/or beam pairs.

The apparatus may further be caused to perform: selecting between the first and second transmission modes for providing said indication based on at least one of: a traffic class of traffic to be transmitted between the apparatus and the network access node, at least one signal quality metric condition to be fulfilled by traffic to be transmitted between the apparatus and the network, at least one determined interference level of a channel between the apparatus and at least one transmission reception point of the mTRP transmission mode; or at least one estimated future interference level of a channel between the apparatus and at least one transmission reception point of the mTRP transmission mode.

The apparatus may further be caused to perform: subsequent to the reporting, obtaining, from the network access node, an instruction to switch between a single transmission reception point, sTRP, mode of communication and the mTRP mode of communication; and performing said switch between the sTRP mode of communication and the mTRP mode of communication.

The apparatus may further be caused to perform: providing, to the network access node, an indication of a capability to indicate a preference of the apparatus for performing a spatial division multiplexing mode of communication and/or a signal frequency network mode of communication.

According to a fifth aspect, there is provided an apparatus comprising means for: obtaining, from a user equipment, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

According to a sixth aspect, there is provided an apparatus comprising: at least one processor; and at least one memory comprising code that, when executed by the at least one processor, causes the apparatus to perform: obtaining, from a user equipment, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

According to a seventh aspect, there is provided a method for an apparatus, the method comprising: obtaining, from a user equipment, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

According to an eighth aspect, there is provided an apparatus comprising: obtaining circuitry for obtaining, from a user equipment, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

The following applies in respect of any (e.g., one or more) of the above fifth to eighth aspects.

The apparatus may further be caused to perform: providing, to the user equipment prior to receiving said report, a configuration for event-based reporting, wherein the configuration comprises the at least one beam management-related condition.

The configuration may further comprise an indication of information that is to be comprised in the report.

The indication of information that is to be comprised in the report may indicate that at least one of the following is to be comprised in the report: information corresponding to L beams and/or beam pairs; an indication indicating whether, for each of L beams and/or beam pairs, a spatial division multiplexing mode of communication and/or a signal frequency network mode of communication is preferred by the user equipment; an indication of whether the L beams and/or beam pairs are for uplink and/or downlink; or an indication of specific beam identifiers for L beams and/or beam pairs.

The apparatus may further be caused to perform: determining to cause the user equipment to switch between the sTRP mode of communication and the mTRP mode of communication based on the report; and providing, to the user equipment, an instruction to switch between the sTRP mode of communication and the mTRP mode of communication.

The apparatus may further be caused to perform: providing at least one beam for the sTRP mode of communication and/or the mTRP mode of communication.

The following applies in respect of any (e.g., one or more) of the above first to eighth aspects.

The at least one beam management-related condition may comprise at least one user equipment initiated beam management condition.

The first transmission mode may be a spatial division multiplexing mode, and the second transmission mode may be a single frequency network transmission mode.

The first transmission mode may have a greater throughput than the second transmission mode, and/or the second transmission mode may be more reliable than the first transmission mode.

The at least one beam management-related condition may comprise a condition for switching from a single transmission reception point, sTRP, mode of communication to the mTRP mode of communication.

The at least one beam management-related condition may comprise a condition for switching to a single transmission reception point, sTRP, mode of communication from the mTRP mode of communication.

The one or more conditions may comprise respective values corresponding to at least one of the following parameters: a reference signal received power; a transmission rank of the apparatus according any of the first to fourth aspects and/or of the user equipment according to any of the fifth to eighth aspects; a maximum power reduction; or a relative power imbalance between two beams.

The report may comprise one of the following indications: an indication that the at least one beam management-related condition has been met for switching between a single transmission reception point, sTRP, communication mode and the mTRP communication mode is for an uplink direction only; an indication that the at least one beam management-related condition has been met for switching between an sTRP communication mode and the mTRP communication mode is for a downlink direction only; or an indication that the at least one beam management-related condition has been met for switching between an sTRP communication mode and the mTRP communication mode is for both the uplink direction and downlink direction.

The report may comprise at least one of the following indications: an indication that the apparatus according to any of the first to fourth aspects and/or of the user equipment according to any of the fifth to eighth aspects is able to simultaneously transmit, simultaneously receive, and/or simultaneously transmit and receive using M beams of a same transmission reception point; or an indication that the apparatus according any of the first to fourth aspects and/or of the user equipment according to any of the fifth to eighth aspects is able to simultaneously transmit, simultaneously receive, and/or simultaneously transmit and receive using N beams of different transmission reception points.

**The** indication that the apparatus according any of the first to fourth aspects and/or of the user equipment according to any of the fifth to eighth aspects is able to simultaneously transmit, simultaneously receive, and/or simultaneously transmit and receive using M beams of a same transmission reception point may identify the M beams; and/or the indication that the apparatus according any of the first to fourth aspects and/or of the user equipment according to any of the fifth to eighth aspects is able to simultaneously transmit, simultaneously receive, and/or simultaneously transmit and receive using N beams of different transmission reception points may identify the N beams.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

### DESCRIPTION OF FIGURES

Embodiments will now be described, by way of example only, with reference to the accompanying Figures in which:
Figure 1 shows a representation of a network system according to some example embodiments;
Figure 2 shows a representation of a control apparatus according to some example embodiments;
Figure 3 shows a representation of an apparatus according to some example embodiments;
Figure 4 illustrates example signals;
Figures 5A to 6B illustrate example methods that may be performed by example apparatus;
Figures 7 to 8 illustrate example signalling; and
Figure 9 illustrates example transmission modes.

### DETAILED DESCRIPTION

The following describes operations that may be performed in relation to providing a report, from a user equipment (UE) to a network access node, in response to the UE determining that at least one beam management-related condition for multi-transmission reception point (mTRP) has been fulfilled.

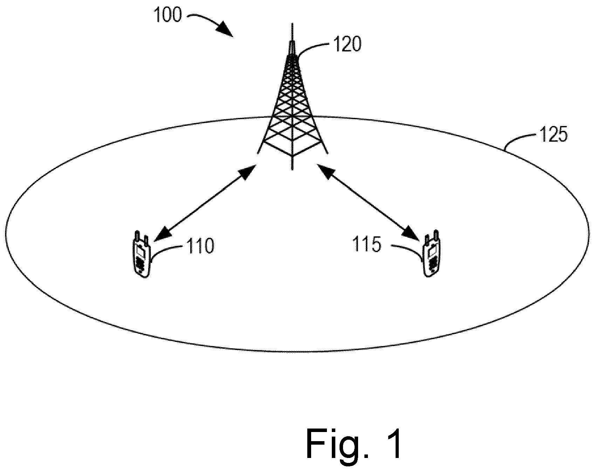

Although this will be discussed in more detail below, Figures 1 to 3 are first discussed in order to provide an example of a communication environment and associated apparatus in which the presently described techniques may be deployed. It is understood that these Figures are merely provided as an example, and that the presently described techniques may be deployed in other communication systems.

Figure 1 illustrates an example communication environment in which example embodiments of the present disclosure can be implemented.

Figure 1 shows an example communication environment 100 in which example embodiments of the present disclosure can be implemented.

In the communication environment 100, a plurality of communication devices, comprising user devices 110 and 115 (also referred to herein as a "terminal" or "terminal device") and a network device 120 (also referred to herein as a "network access node"), can communicate with each other. The network device 120 may serve a coverage area, called a cell 125. The user device 110 may have access to a communication network via the cell 125. In some example embodiments, both the user device 110 and the network device 120 may be configured to implement a beamforming technique and communicate with each other via a plurality of beams.

The term "terminal device" refers to any end device that may be capable of wireless communication. By way of example rather than limitation, a terminal device may also be referred to as a communication device, user equipment (UE), a Subscriber Station (SS), a Portable Subscriber Station, a mobile device, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), a machine-type communications (MTC) device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user device", "user equipment" and "UE" may be used interchangeably.

As used herein, the term "network device" is used interchangeably with "network access node", and refers to a node in a communication network via which a terminal device accesses the network and receives services therefrom. The network device may refer to a base station (BS) or an access point (AP), for example, a transmission reception point (TRP), a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

In some example embodiments, a link from the network device 120 to the user device 110 or 115 is referred to as a DL, while a link from the user device 110 or 115 to the network device 120 is referred to as a UL. Links are also referred to herein as "channels". In DL, the network device 120 is a Tx device (or a transmitter), and the user device 110 or 115 is a Rx device (or a receiver). In UL, the user device 110 or 115 is a Tx device (or a transmitter), and the network device 120 is a Rx device (or a receiver). A link between the user device 110 and another user device (not shown) is referred to as a sidelink (SL). In SL, one of the user devices is a Tx device (or a transmitter), and the other of the user devices is a Rx device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

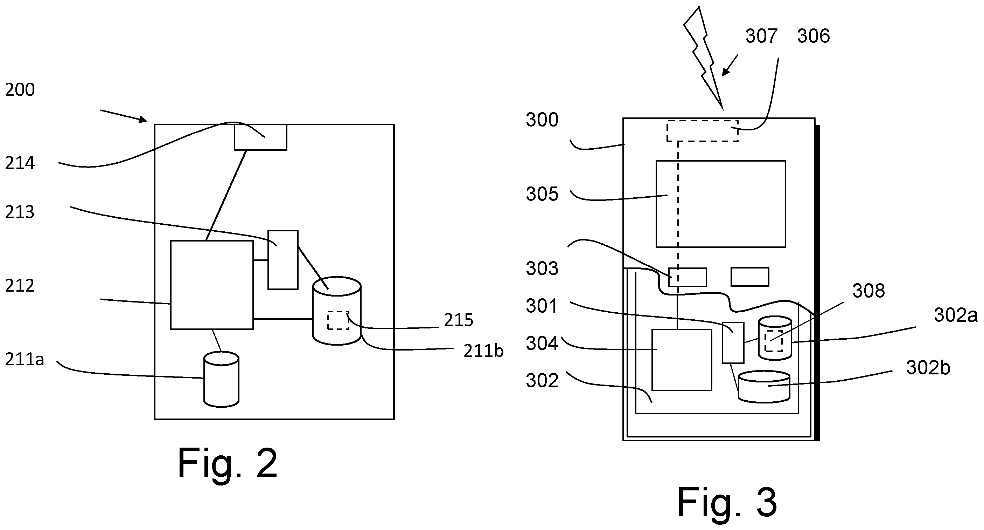

Figure 2 illustrates an example of a control apparatus 200 for causing a network device 120 (such as the network device described in Figure 1) to perform its operations. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the network device. In some embodiments, each function of the network device comprises a control apparatus 200. In some exemplary embodiments, the apparatus 200 may be implemented at the network device 120 or may be the network device 120.

Figure 3 illustrates an example of a terminal 300, such as the user device 110, 115 illustrated on Figure 1. The terminal 300 may be provided by any device capable of sending and receiving radio signals, such as the user device described herein. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, memory 302 comprising at least one memory ROM 302a, at least one RAM 302b and other possible components 303 for use in software and hardware aided execution of tasks it is designed to perform, including control of access to and communications with access systems (such as a network access system provided by the network device described above in relation to Figures 1 and 2) and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as key pad 305, touch sensitive screen or pad, combinations thereof or the like. Optionally one or more of a display, a speaker and a microphone may be provided depending on the type of the device.

In some exemplary embodiments, the terminal 300 may be an apparatus comprising at least one processor and at least one memory storing instructions that, when executed by the at least one processor, cause a user device 110, 115 to perform examples or embodiments described in this document.

The UE of Figure 1 often communicates with network nodes of Figure 1 using beamforming. Beamforming is a signal processing technique that uses highly directional beams for signalling. This is illustrated with reference to signals that are used by a UE during different stages of signalling between a UE and a network access node. Throughout the following, it is understood that the term "network access node" will be used interchangeably with the term "transmission reception point" (TRP). However, it is understood that a single network access node (e.g., a gNB) may be configured to provide a single TRP or a plurality of TRP at a single point in time, depending on its configuration.

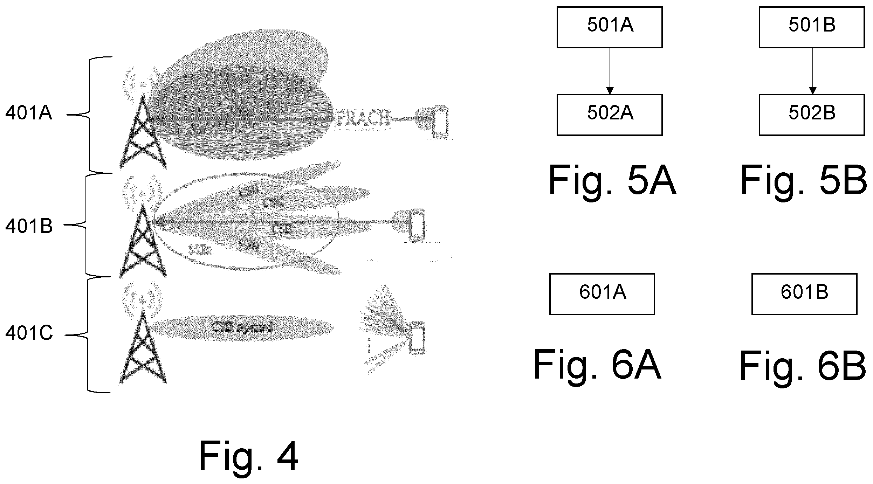

Figure 4 illustrates three different stages, 401A, 401B, 401C that reflect different signalling being received by a UE from a TRP.

During 401A, the UE is configured to receive a plurality of synchronisation signal block (SSBs).

An SSB comprises a synchronisation signal part and a broadcast part. The synchronisation signal part comprises a Primary Synchronization Signal (PSS) and a Secondary Synchronization Signal (SSS), which are collectively referred to herein as synchronisation signals. The broadcast part comprises a Physical broadcast channel (PBCH) and a demodulation reference signal (DMRS) for PBCH demodulation. Demodulation of the PBCH may comprise a system information block (SIB), such as SIB1. The SSB may be used by a UE for initial access procedures, including random access procedures.

During 401B, a TRP sweeps a plurality of reference signals (labelled as channel state information-reference signals (CSI-RS) herein) within a single SSB. The CSI-RS are much narrower in bandwidth than an SSB, and the UE may use them to determine a "best beam" provided to the UE by that TRP. In general, a "best beam" (and/or "best beam pair") may be considered to be a beam (and/or beam pair) that is ranked as the best by the UE according to beam ranking criteria applied at the UE. In an example, a best beam may be determined as the beam that has a highest reference signal receive power (or some other signal quality metric). In an example, a best beam pair comprises a beam pair whose minimum reference signal receive power is higher than any other beam pair and whose receive power difference between the two beams is less than a preconfigured threshold.

In more detail, a CSI-RS is a downlink reference signal that is used by a UE for measuring various radio channel quality metrics (e.g., reference signal receive power (RSRP), reference signal receive quality (RSRQ), signal to interference and noise ratio (SINR), etc.). Values indicative of the measured radio channel quality metrics may be subsequently reported to a network access node. The measured radio channel quality metrics may be used by the UE and/or by the network access node for setting at least one transmission and/or reception parameter with the aim of ameliorating a signal quality metric associated with signal transmission and/or reception. For example, the measured radio channel quality metrics may be used for selecting at least one of a modulation scheme, code rate, beam forming, etc. It is understood that although a CSI-RS may be used for beam forming, and other beam management properties, that beam management is not limited to being performed on such reference signals.

CSI-RS is used in 5G for a plurality of purposes, including beam measurements (e.g., for beam management methods), time and frequency tracking as well as, channel state information (CSI) acquisition.

Measurements made on the CSI-RS may be reported periodically (e.g., using the physical uplink control channel) and/or aperiodically (e.g., using the physical uplink shared channel).

In general, for periodic and aperiodic CSI reporting, a user equipment (UE) receives a CSI measurement configuration from a network access node, which may indicate the total number of CSI-RS antenna ports and a resource configuration (e.g., a time-frequency resource configuration). The UE may subsequently measure received signal power for each antenna port and select (and report on) a set of antenna ports based on these measurements.

Finally, once a "best beam" has been selected by a UE, the UE may be served by repeated transmissions of that beam by the TRP (e.g., during 401C). When a UE is connected to a TRP in such a way, this is known as single TRP (sTRP).

Several techniques have been introduced into communication network in order that transmissions may be received more reliably.

One of these techniques, considered below, is known as Multiple Transmission and Reception Point (mTRP).

An mTRP mode of communication relates to scenarios in which a network access node (e.g., a gNB, cell, or any other network access node example of Figure 2) is configured to use multiple transmission and reception points (TRPs) for communicating with a single UE. Examples of TRPs include, for example, at least one of: a macro-cell, a small cell, a pico-cell, a femto-cell, a remote radio head, or a relay node. It is understood that this list of TRP types is not exhaustive. It is further understood that a single mTRP configuration may comprise only the same type of TRP, or may comprise a plurality of different types of TRPs. An mTRP mode of communication is set in contrast to an sTRP mode of communication, which (as described above) involves transmission and/or reception on a single beam (e.g., on a beam provided by a single TRP).

In order to make use of the availability of mTRP scenarios, a serving TRP of the UE is configured to identify situations in which an mTRP mode of communication is more advantageous to the UE and when an sTRP mode of communication is more advantageous to the UE. Stated differently, a network is configured to identify situations in which it is better for a UE to switch from an sTRP mode of communication to an mTRP mode of communication and vice versa.

In more detail, a serving TRP of a UE signals the UE to configure the UE to provide measurements (e.g., periodic measurements) on beams that are received by the UE from multiple TRP.

The UE subsequently performs measurements on beams and/or beam pairs in order to identify at least one "best" beam and/or beam pair (e.g., a beam and/or beam pair that has the best signal quality metric (as measured by the UE), where the signal quality metric may comprise, for example, a reference signal received power (RSRP), a signal to inference and noise ratio (SINR), and/or any other metric indicating a quality of a beam at the UE. As described above with reference to aperiodic and periodic CSI-RS reporting, an indication of the measured signal quality metric for a preconfigured number of beams may be reported to the UE's serving TRP. The serving TRP may subsequently determine to perform a beam management procedure, which may include causing the UE to switch from an sTRP mode of operation to an mTRP mode of operation.

However, such beam management mechanisms may add an additional load to the signalling required between a UE and a TRP.

To address at least one of the above-mentioned issues, the following proposes at least one example in which a UE is configured to provide reporting on beams and/or beam pairs when at least one preconfigured beam management condition is fulfilled for at least one of those beams and/or beam pairs.

Such a configuration is advantageous over a periodic and/or aperiodic solicitation of beam measurements from a TRP as it means that no reporting is performed when the measured beams and/or beam pairs does not indicate that a switch between sTRP and mTRP would be advantageous to a UE.

The at least one beam management condition may alternatively be labelled as a UE-initiated beam management (UEIBM) condition . UE-initiated beam management (UEIBM) refers to the case where the UE may be configured with at least one event (e.g., at least one condition) to trigger a beam report: in case the at least one event/condition occurs or is satisfied, the UE may start UEIBM reporting. Stated differently, when the at least one event/condition occurs or is satisfied, the UE may transmit the beam report on pre-scheduled resources, or the UE may first request the resources for UEIBM report (e.g. with PUCCH, SR) and then the UE may transmit the beam report on resources granted for this request. The UE may benefit from initiating the UEIBM reporting, for example for faster beam switch, minimizing reporting overhead, or reporting new beams preferred by the UE.

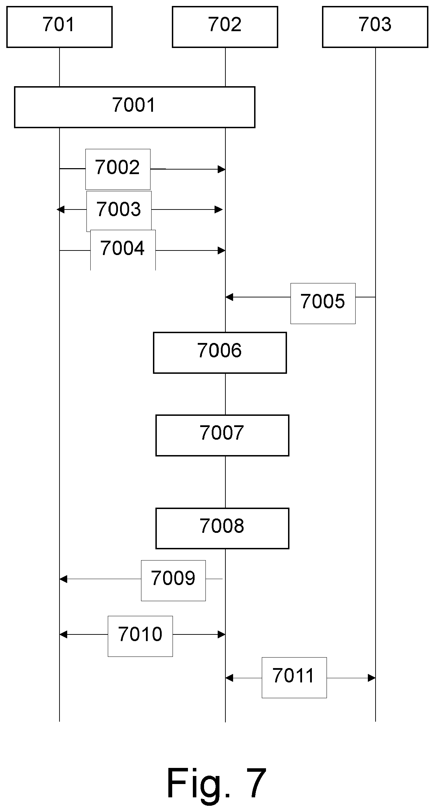

In order to illustrate these principles, the following will first consider an overview of how a UE may be configured to perform such report (with reference to Figures 5A to 6B), before providing examples of how the presently described techniques may be realised in signalling between apparatus in Figures 7 to 9.

Figures 5A and 5B illustrate a first set of interacting apparatus, and Figures 6A and 6B illustrate a second set of interacting apparatus. It is understood in the following that references to "transmitting" may be alternatively be termed as "providing" (and vice versa). Similarly, it is understood in the following that references to "receiving" may be alternatively termed as "obtaining" (and vice versa). It is further understood that where the same terms are used between the examples of Figures 5A to 6B, these terms may be understood by the accompanying descriptions of such terms in any of these Figures.

Figure 5A illustrates a method that may be performed by an apparatus. The apparatus may be an apparatus of a user equipment, such as described above with reference to Figures 1 to 3.

During 501A, the apparatus detects that at least one beam management-related condition has been met for a multi-transmission reception point, mTRP, mode of communication.

During 502A, the apparatus transmits, based on the detecting, to a network access node, a report indicating that the apparatus has detected that at least one beam management-related condition has been met for the mTRP mode of communication. Stated differently, during 502A, the apparatus transmits the report of 502A based on (e.g., in response to and/or in dependence on) the detection of 501A.

The network access node may correspond to the network access node of Figure 5B. For example, the network access node of Figure 5B may comprise a TRP. The network access node of Figure 5B may comprise a serving TRP to the apparatus of Figure 5A.

The apparatus of Figure 5A may obtain, from the network access node, a configuration for event-based reporting, wherein the configuration comprises the at least one beam management-related condition.

The configuration for event-based reporting may further comprise an indication of information that is to be comprised in the report.

Stated differently, the configuration for event-based reporting may comprise at least one beam management-related condition (e.g., the above-labelled at least one beam management condition) that, when fulfilled, causes the apparatus of Figure 5A to transmit a report to the network access node, and the configuration may define what is to be comprised in that report.

The at least one beam management condition may comprise at least one of a plurality of different conditions.

For example, the at least one beam management-related condition may comprises a condition for switching from a single transmission reception point, sTRP, mode of communication to the mTRP mode of communication. The apparatus of Figure 5A may be configured to monitor the signal qualities of beams and/or beam pairs when the apparatus is in an sTRP mode of communication and determine whether at least one of these monitored signal qualities fulfils the at least one beam management condition for switching from an sTRP mode of communication to the mTRP mode. When such beam management condition(s) are fulfilled, the apparatus of Figure 5A sends a report about this fulfilment to the network access node according to 502A. The information comprised in the report is in accordance with the configuration.

As another example, the at least one beam management-related condition may comprise a condition for switching to a single transmission reception point, sTRP, mode of communication from the mTRP mode of communication. The apparatus of Figure 5A may be configured to monitor the signal qualities of beams and/or beam pairs when the apparatus is in an mTRP mode of communication and determine whether at least one of these monitored signal qualities fulfils the at least one beam management condition for switching to an sTRP mode of communication from the mTRP mode. When such beam management condition(s) are fulfilled, the apparatus of Figure 5A sends a report about this fulfilment to the network access node according to 502A. The information comprised in the report is in accordance with the configuration.

The at least one beam management-related condition may comprise one or more respective values (e.g., one or more thresholds) corresponding to at least one of the following parameters: a reference signal received power; a transmission rank of the apparatus of Figure 5B; a maximum power reduction; or a relative power imbalance between two beams. This last feature may be useful, for example, as it is desirable for a UE (when in an mTRP mode of communication) to be served by beams of similar receive strengths. Consequently, when there is a relatively large receive power imbalance between two beams (e.g., more than a preconfigured threshold amount), those beams are not recommended for an mTRP mode of communication. Similarly, when there is a relatively small receive power imbalance between two beams (e.g., equal to or less than the preconfigured threshold amount), those two beams may be reported as being a suitable beam pair (or a report of 502A may not be triggered).

Analogously, the indication of information that is to be comprised in the report of 502A may indicate one or more of a plurality of different reporting fields.

For example, the indication of information that is to be comprised in the indicates that at least one of the following is to be comprised in the report of 502A may comprise one or more of: information corresponding to L beams and/or beam pairs (where the information corresponding to L beams and/or beam pairs may identify which TRP provides which beam that is being reported on; this may comprise, for example, a coresetPoollndex); an indication indicating whether, for each of L beams and/or beam pairs, a spatial division multiplexing (SDM) mode of communication and/or a signal frequency network mode (SFN) of communication is preferred by the user equipment/apparatus of Figure 5A; an indication of whether the L beams and/or beam pairs are for uplink and/or downlink; or an indication of specific beam identifiers for L beams and/or beam pairs.

As an aside, it is noted that SDM corresponds to a communication configuration of an apparatus in which there is two antenna panel simultaneous transmission where both antenna panels of the apparatus are provided separate precoders and panels are transmitting different layers of one physical uplink share channel (PUSCH). It is further noted that SFN corresponds to a communication configuration of an apparatus in which there is two antenna panel simultaneous transmission where both antenna panels of the apparatus are provided separate precoders and panels are transmitting the same layers of one (e.g., a single) PUSCH. SFN therefore provides greater reliability than SDM, whereas SDM provides a greater throughput than SFN.

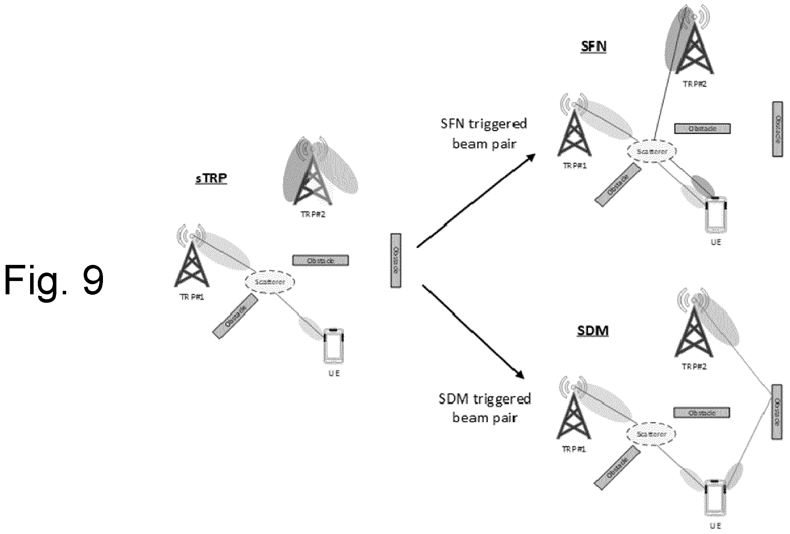

SDM and SFN are illustrated with respect to Figure 9, which shows that, for SFN, the UE uses beams provided by different TRP in a same direction, whereas, for SDM, the UE uses beams provided by different TRP in different directions.

Subsequent to the reporting, the apparatus may obtain, from the network access node, an instruction to switch between a single transmission reception point, sTRP, mode of communication and the mTRP mode of communication. Depending on whether the apparatus of Figure 5A is in an sTRP mode of communication or an mTRP mode of communication when the instruction to switch is received, the instruction may be an instruction to switch from the sTRP mode to the mTRP mode, or an instruction to switch from the mTRP mode to the sTRP mode. The instruction may identify the at least one beam (when switching to the sTRP mode) and/or beam pair (when switching to the mTRP mode) that the apparatus is to switch to. Based on (e.g., in response to) receiving this instruction, the apparatus may perform said switch between the sTRP mode of communication and the mTRP mode of communication.

In addition to the above, the apparatus of Figure 5A may provide, to the network apparatus, an indication of a capability to indicate a preference of the user equipment/apparatus for performing a spatial division multiplexing mode of communication and/or a signal frequency network mode of communication in the report. This may be as described later in connection with Figures 6A and 6B.

Figure 5B illustrates a method that may be performed by an apparatus for network access node. The network access node may be as described above in connection with Figure 5A. For example, the apparatus of Figure 5B may be a serving TRP to the apparatus of Figure 5A. Stated differently, the apparatus of Figure 5B may be configured to provide to provide at least one beam to the apparatus of Figure 5A for the below mentioned sTRP mode of communication and/or the below-mentioned mTRP mode of communication.

During 501B, the apparatus of Figure 5B receives, from a user equipment (e.g., the user equipment/apparatus of Figure 5A), a report indicating that the apparatus user equipment has detected that at least one beam management-related condition has been met for a multi-transmission reception point, mTRP, mode of communication.

During 502B, the apparatus of figure 5B determines, based on the report, whether to cause the user equipment to switch between a single transmission reception point, sTRP, mode of communication and the mTRP mode of communication.

When the apparatus of Figure 5B determines not to cause the UE to switch between the sTRP mode of communication and the mTRP mode of communication, the apparatus of Figure 5B does not provide an instruction to the UE to switch between the sTRP mode of communication and the mTRP mode of communication.

Conversely, when the apparatus of Figure 5B determines to cause the UE to switch between the sTRP mode of communication and the mTRP mode of communication, the apparatus of Figure 5B provides an instruction to the UE to switch between the sTRP mode of communication and the mTRP mode of communication. This may be as described above in connection with Figure 5A. For example, the instruction may be an instruction to switch from the sTRP mode to the mTRP mode when the UE is currently in the sTRP mode, and/or the instruction may be an instruction to switch from the mTRP mode to the sTRP mode when the UE is currently in the mTRP mode. Further, as discussed above, the instruction may identify at least one beam and/or beam pair that the UE is to use for the new mode of communication (e.g., the mode of communication to which the UE is switched).

The apparatus may provide, to the user equipment prior to receiving said report, a configuration for event-based reporting, wherein the configuration comprises the at least one beam management-related condition. The configuration may further comprise an indication of information that is to be comprised in the report. The configuration may be as described above in relation to Figure 5A.

In both of the examples of Figures 5A and 5B, the at least one beam management-related condition may comprise at least one user equipment initiated beam management condition. For example, the at least one beam management-related condition may alternatively be labelled as at least one user equipment initiated beam management condition.

The above-mentioned report may comprise additional information that may or may not be specified by the configuration of Figures 5A and 5B.

For example, the report may further indicate a direction (e.g., uplink, downlink, or both uplink and downlink) of beams being reported in the report. For example, the report may comprise one of the following indications: an indication that the at least one beam management-related condition has been met for switching between a single transmission reception point, sTRP, communication mode and the mTRP communication mode for an uplink direction only; an indication that the at least one beam management-related condition has been met for switching between an sTRP communication mode and the mTRP communication mode for a downlink direction only; or an indication that the at least one beam management-related condition has been met for switching between an sTRP communication mode and the mTRP communication mode for both the uplink direction and downlink direction. The apparatus of Figure 5A may be preconfigured to report this beam direction information (e.g., without it being provided in the configuration received from the network access node), or the apparatus of Figure 5A may be configured to report this beam direction information via the configuration received from the network access node.

The above-mentioned report may further be preconfigured to comprise or be configured by the configuration to comprise at least one of the following indications: an indication that the user equipment is able to simultaneously transmit, simultaneously receive, and/or simultaneously transmit and receive using M beams of a same transmission reception point; or an indication that the user equipment is able to simultaneously transmit, simultaneously receive, and/or simultaneously transmit and receive using N beams of different transmission reception points. Stated differently, the report may comprise an indication of whether the UE is capable of performing inter-mTRP (multiple TRP provided by different network access nodes) or intra-mTRP (multiple TRP provided by a single network access node).

The indication may identify specific beams of those TRP mentioned in the preceding paragraph, for example, the indication that the user equipment is able to simultaneously transmit, simultaneously receive, and/or simultaneously transmit and receive using M beams of a same transmission reception point may identify the M beams. Further, the indication that the user equipment is able to simultaneously transmit, simultaneously receive, and/or simultaneously transmit and receive using N beams of different transmission reception points identifies the N beams.

Figures 6A and 6B illustrate another feature of the presently described principles. In particular, Figures 6A and 6B illustrate methods that may be performed by respective interacting apparatus. The apparatus of Figures 6A and 6B may perform at least one feature described above in connection with the methods of 5A and 5B. It is further understood that the apparatus of Figures 5A and 5B may perform at least one of the features of Figures 6A and/or 6B that is not currently mentioned above in relation to Figures 5A and 5B.

Figure 6A illustrates a method that may be performed by an apparatus. The apparatus may comprise a user equipment (e.g., as described above in connection with Figures 1 to 3).

During 601A, the apparatus reports, to a network access node, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

The apparatus of Figure 6A may further be caused to select between the first and second transmission modes for providing said indication based on at least one of: a traffic class of traffic to be transmitted between the apparatus and the network access node, at least one signal quality metric condition to be fulfilled by traffic to be transmitted between the apparatus and the network, at least one determined interference level of a channel between the apparatus and at least one transmission reception point of the mTRP transmission mode; or at least one estimated future interference level of a channel between the apparatus and at least one transmission reception point of the mTRP transmission mode.

The at least one beam management condition may be as described above in connection with Figures 5A and 5B.

As mentioned above, the apparatus of Figure 6A may further perform at least one method described above in connection with Figure 5A.

For example, the apparatus of Figure 6A may obtain, from the network access node, a configuration for event-based reporting, wherein the configuration comprises the at least one beam management-related condition. The configuration may be as described above in connection with Figures 5A and 5B. For example, the configuration may further comprise an indication of information that is to be comprised in the report, where the information that is to be comprised in the report may be as described above in connection with Figures 5A and 5B.

As another example, the apparatus of Figure 6A may, subsequent to the reporting, obtain, from the network access node, an instruction to switch between a single transmission reception point, sTRP, mode of communication and the mTRP mode of communication, and perform said switch between the sTRP mode of communication and the mTRP mode of communication. This may be as described above in connection with Figures 5A and 5B.

Further, the apparatus of Figure 6A may provide, to the network access node, an indication of a capability to indicate a preference of the user equipment for performing a spatial division multiplexing mode of communication and/or a signal frequency network mode of communication. The spatial division multiplexing mode may correspond to the first mode of communication and the signal frequency network mode of communication may correspond to the second mode of communication.

Figure 6B illustrates a method that may be performed by an interacting apparatus to the apparatus of Figure 6A. For example, the method of Figure 6B may be performed by the network access node mentioned in 601A. The apparatus of Figure 6B may provide a serving TRP (e.g., a serving beam and/or serving cell) to the apparatus of Figure 6A. Stated differently, the apparatus of Figure 6B may be configured to provide at least one beam for the sTRP mode of communication and/or the mTRP mode of communication.

During 601B, the apparatus of Figure 6B obtains, from a user equipment (e.g., the apparatus of Figure 6A), a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

The report may be as described above in connection with Figure 6A.

As mentioned above, the apparatus of Figure 6B may perform at least one method described above in connection with Figure 5B.

For example, the apparatus of Figure 6B may provide, to the user equipment prior to receiving said report, a configuration for event-based reporting, wherein the configuration comprises the at least one beam management-related condition. Further, the configuration may comprise an indication of information that is to be comprised in the report. This may be as described above in connection with Figure 5B.

Further, similar to the apparatus of Figure 5B, the apparatus of Figure 6B may determine whether to signal the UE/apparatus of Figure 6A an instruction to cause the UE to switch between the sTRP mode of communication and the mTRP mode of communication based on the report, and either signal that instruction or not signal that instruction based on the determination. This may be as described above in connection with Figure 5B.

For both of the apparatus of Figures 6A and 6B, the at least one beam management-related condition may be as described above in connection with Figures 5A and 5B. For example, the at least one beam management-related condition may comprise at least one user equipment initiated beam management condition.

For both of the apparatus of Figures 6A and 6B, the first transmission mode may be a spatial division multiplexing mode, and the second transmission mode may be a single frequency network transmission mode.

For both of the apparatus of Figures 6A and 6B, the first transmission mode may have a greater throughput than the second transmission mode, and/or the second transmission mode may be more reliable than the first transmission mode.

The apparatus of Figure 6B may select the indicated transmission mode (e.g., the first transmission mode or the second transmission mode) and cause an instruction to be provided to the UE for causing the UE to transmit and/or receive on a beam and/or beam pair using that transmission mode. This instruction may be part of, or otherwise comprised in, the instruction to switch between the sTRP mode and the mTRP mode.

The examples of Figures 5A to 6B comprise a plurality of advantages. For example, in mTRP scenarios, the goal may not only be to reduce the reporting overhead (e.g., Figures 5A and 5B) but also to enable the right transmission scheme (e.g., SDM or SFN) to be deployed when the switch is performed (e.g., Figures 6A and 6B).

Although the features, functionalities and principles of Figures 5A to 6B may be implemented in a wide range of different communication networks, the following considers examples in which they are implemented in a 3GPP system.

In more detail, the ability to simultaneously receive and/or transmit across multiple panels depends on some static conditions (e.g., a number of antenna panels, the receive and/or transmit radio frequency chains per panel, the availability of joint and/or separate processing of signals at baseband), but also depends on some dynamic parameters (e.g., a UE's orientation, a user presence and/or location relative to the UE, beam gain, link, link budget, rank, etc.).

A UE as described herein may therefore be configured to evaluate the effect that such dynamic parameters have on a received and/or transmitted signal by measuring signal quality metrics of a plurality of different beams for different TRPs.

For example, when the UE is in an sTRP mode of communication, the UE may be configured to measure beams from multiple TRPs and identify when:
- The UE is able to switch from sTRP to mTRP transmission scheme for signalling via at least one of following directions: the downlink direction only, the uplink direction only, or for both downlink and uplink directions; and/or
- The UE is able to simultaneously transmit or receive or both:
   a. from M beams (e.g. M=2) of the same TRP
   b. from M beams (e.g. M=2) of L TRPs (e.g. L=2)

When a beam-management-related condition is fulfilled for triggering a UE to send a report to the network access node, the UE may cause the report to be sent.

The above conditions are applicable to both intra-cell mTRP and inter-cell mTRP scenarios.

For example, in the case of a) of this second bullet point, the UE may subsequently send a report to its serving TRP that identifies the TRP (e.g., using a coresetPoollndex). The report may further identify specific beams of this TRP (e.g., using a synchronisation signal/physical broadcast channel Resource Block Indicator (SSBRI) and/or CSI-resource indicator (CRI), and/or a transmission configuration indication state index of the associated coresetPoollndex).

Analogously, in the case of b) of this second bullet point, the UE may subsequently send a report to its serving TRP that identifies the TRPs (e.g., for each beam pair reported, using respective coresetPoolIndexs for each of the two TRPs in a beam pair). The report may further identify specific beams of these TRP (e.g., using an SSBRI, and/or a CRI, and/or a transmission configuration indication (TCI) state index of the associated coresetPoolIndexs).

Analogously, the UE may also trigger a report to be provided to a serving TRP when mTRP operation is no longer possible, and it needs to revert to sTRP. For example, when the UE capability value set, indicating the maximum supported number of sounding reference signal (SRS) antenna ports is being reduced, this may cause the operation of the UE to switch from an mTRP communication mode to an sTRP communication mode.

Another example trigger for transmitting a report indicating to revert to an sTRP mode of communication (e.g., another example beam management-related condition) may be the detection, by the UE, of a large power imbalance (e.g. from a maximum power reduction (MPR) variations) between the two current serving beams.

Another example trigger for transmitting a report indicating to revert to sTRP operation may be the detection by the UE of a large imbalance in a reference signal receive power (RSRP). For example, when a UE measures very low RSRP from one TRP when compared to the other TRP, this may indicate that there is a large power imbalance between two current serving beams.

As illustrated above, a UE may comprise, in the report, an indication as to whether SDM operation, SFN operation or any of SDM and SFN operation is preferred by the UE for a particular beam and/or beam pair. The inclusion of such an indication may also be configured by the serving TRP as a reporting criteria corresponding to a beam management-related condition fulfilment.

Figures 7 to 9 illustrate examples of the above-described principles. It is understood that these are examples only, and that the above-described principles may be implemented in other ways, depending on the communication protocol.

Figure 7 illustrates signalling that may be performed between a first TRP 701, a UE 702, and a second TRP 703.

During 7001, the UE 702 is in a radio resource control (RRC) Connected state with the first TRP 701.

During 7002, the first TRP 701 signals the UE 702. This signalling may comprise a configuration for configuring the UE for when to provide a report to the first TRP 701. For example, the signalling may comprise at least one beam management-related condition that, when fulfilled, causes the UE 702 to report information for switching from a single-transmission reception point, sTRP, mode of communication (involving only the first TRP) to a multi-transmission reception point, mTRP, mode of communication (involving both the first TRP and the second TRP).

The configuration may comprise an indication of when the report is to be sent from the UE 702 to the first TRP 701 (e.g., an indication of the at least one beam management-related condition to be fulfilled). The configuration may comprise an indication of what information is to be included in the report from the UE 702.

The at least one beam management-related condition may comprise at least one of a plurality of different thresholds for one or more parameters. When a threshold is met by a measurement of a property corresponding to the parameter of that threshold, the condition is considered to be fulfilled. The one or more parameters may comprise, for example, one or more of a reference signal received power (RSRP), or coresetpoolindex(s). These are described further herein.

In an example, the event for triggering the reporting (e.g., the condition to be fulfilled for a report to be sent to the network) of the mTRP information to the first TRP may be that a new beam has an RSRP which is a threshold value better than RSRP of the current beam (potentially also with a negative threshold, e.g. -3 dB, to make sure that the new beam has similar e.g. RSRP than the current beam), with the new beam to be then scheduled with either SDM or SFN together with the current beam.

As another example, the event for triggering mTRP may be that a new beam pair has an associated RSRP that is a threshold value or more above the current RSRP of the current beam. The associated RSRP of a beam pair may comprise , for example minimum RSRP or average RSRP within the pair. The network may subsequently cause the UE to be scheduled with the new beam pair using either SDM or SFN.

The information to be included in the report may comprise one or more of a number of beams to be reported on, a number of beam pairs to be reported on, an indication of whether SDM or SFN is preferred, or an indication of whether the information to be included in the report from the UE 702 are for simultaneous uplink, simultaneous downlink, or simultaneous uplink and downlink.

As another example, when an event for triggering mTRP is detected, the UE may be configured to report on a fixed number N of beams and/or beam pairs to the network in the report. Therefore, there may be at least one beam and/or beam pair comprised in the report that does not fulfil the at least one beam management-related condition for reporting.

During 7003, the UE 702 and the first TRP 701 exchange communications. This may be performed using the physical downlink shared channel (PDSCH) and the physical uplink shared channel (PUSCH).

During 7004, the first TRP 701 transmits to the UE 702. The signalling of this transmission may comprise at least one downlink reference signal. The downlink reference signal may comprise any type of reference signal. For example, this signalling may comprise at least one first channel state information (CSI) reference signal and/or a synchronisation signal burst.

During 7005, the second TRP 703 transmits to the UE 702. The signalling of this transmission may comprise at least one downlink reference signal. The downlink reference signal may comprise any type of reference signal. For example, this signalling may comprise at least one first channel state information (CSI) reference signal and/or a synchronisation signal burst.

During 7006, the UE 702 detects the signalling of 7004 and 7005. The UE 702 may be able to distinguish which detected reference signal corresponds to which TRP based on the coresetPoollndex.

In more detail, for a UE to report the beams groups that may be concurrently received and/or concurrently transmitted on, UE needs to have information on which synchronization signal block (SSB) beams belong to which TRP. This association is currently provided to the UE via receipt of a "CoresetPoollndex" configuration from a network access node. "CoresetPoolIndex" is also only provided to the UE when the UE is in an RRC Connected mode with that network access node. In current 3GPP specifications, in the frequency domain, a CORESET is a set of contiguous or distributed physical resource blocks (PRBs) within which a UE attempts to blindly decode a DCI transmitted by a network access node. In current 3GPP specifications, in the time domain, a CORESET spans 1, 2, or 3 contiguous orthogonal frequency division multiplex (OFDM) symbols. The CoresetPoolIndex provides an index value that identifies those resources used for the CORESET.

Consequently, stated differently, during 7006, the UE may monitor candidate beams and/or candidate beam pairs. When the candidate beams and/or beam pairs are radio resource control (RRC) configured, the candidate beams may comprise beams that are associated to (e.g., provided by) different TRPs e.g., via coresetPoollndex. For example, with 2 TRPs being monitored during 7006, coresetPoolIndex0 may correspond to beams provided by TRP1 and coresetPoolIndex1 may correspond to beams provided by TRP2. The coresetPoollndex may therefore be used to distinguish between them.

The UE 702 measures the candidate beams and determines that one candidate beam / beam pair has triggered the event for sending a report to the first TRP for triggering a beam management procedure (e.g., for enabling mTRP operations).

In an example, the UE 702 monitors signal qualities of a plurality of beams and/or beam pairs until N beams and/or N beam pairs have been determined by the UE 702 as fulfilling the at least one beam management-related condition comprised in the configuration of 7002.

In this case, as soon as N beams and/or beam pairs are determined to have fulfilled the at least one beam management-related condition comprised in the configuration of 7002, the UE sends a report about this condition fulfilment to the first TRP regarding the N beams and/or beam pairs.

In a variation to this, the UE 702 may continue performing signal quality metric measurements for the plurality of beams (and comparing them to the at least one beam management-related condition) until all beams provided by the first and second TRP have been monitored. In this case, the UE may either only send a report to the first TRP when at least N beams and/or beam pairs have fulfilled the at least one beam management-related condition (where N is predefined), or may send a report for fewer than N beams and/or beam pairs when less than N beams and/or beam pairs are determined to have fulfilled the at least one beam management-related condition.

During 7007, the UE maps properties of each detected downlink reference signal that has an RSRP power above a preconfigured threshold (e.g., in the at least one event-based parameter) and to antenna transmission and/or reception properties. The antenna transmission and/or reception properties may comprise, for example, at least one of: a selection of antennas used for the transmission and/or reception operation, a number of ports, an RSRP, a power headroom (PH), or a maximum power reduction (MPR). From this mapping, the UE selects at least one pair of beams. A beam pair may comprise one beam from the first TRP 701, and another beam from the second TRP 703. Where reference is made to a single beam (e.g., to a beam that is not being reported as a beam pair), this may refer to a beam provided by a serving cell (e.g., by the first TRP 701 in the present example).

The selected at least one pair of beams may correspond to at least one "best" beam pair. A best beam pair refers to a beam that that is evaluated by the UE (according to preconfigured criteria at the UE 702) as being more advantageous to the UE (e.g., for transmission and/or reception) than other beam pairs. Beam pairs may be ranked from "best" to "worst" by the UE according to the preconfigured criteria.

For example, when there are more beams and/or beam pairs to be reported than the number configured in the configuration of 7002 (e.g., there are more than N beams and/or beam pairs that fulfil the at least one beam management-related condition, the UE may select the N beams and/or beam pairs having the "best" RSRP value (e.g., the highest RSRP when beams are to be reported, and the highest minimum RSRP within a beam pair when beam pairs are to be reported) and not report the remaining beams.

In contrast, when there are fewer beams and/or beam pairs that fulfilled the at least one beam management-related condition configured during 7002 than the number of beams and/or beam pairs configured to be reported during 7002, the UE may determine to report those beams and/or beam pairs that fulfilled the at least one beam management-related condition, and additionally the next best beams and/or beam pairs until the number to be reported has been reached. The "best" beams and/or beam pairs may be selected as described above.

During 7008, the UE 702 determines whether the selected beam pair(s) of 7007 fulfils the at least one beam management-related conditions for triggering a report to the first TRP 701 according to the configuration of 7002. When the at least one beam management-related condition is fulfilled, the UE proceeds to 7009.

During 7009, the UE 702 signals the first TRP 701. The signalling of 7009 may comprise a report. This report may comprise the information that the configuration of 7002 configured the UE to comprise. This report may comprise information that may be used by the first TRP 701 for performing a switch from sTRP to mTRP.

In the example of Figure 7, the first TRP 701 responds to the signalling of 7009 by causing the UE to switch to mTRP with the first TRP 701 and the second TRP 703 using a beam pair reported on during 7009. This is reflected by the communications of 7010 and 7011.

During 7010, the UE 702 and the first TRP 701 exchange communications. This may be performed using the PDSCH and the PUSCH.

Further, during 7011, the UE 702 and the second TRP 703 exchange communications. This may be performed using the PDSCH and the PUSCH.

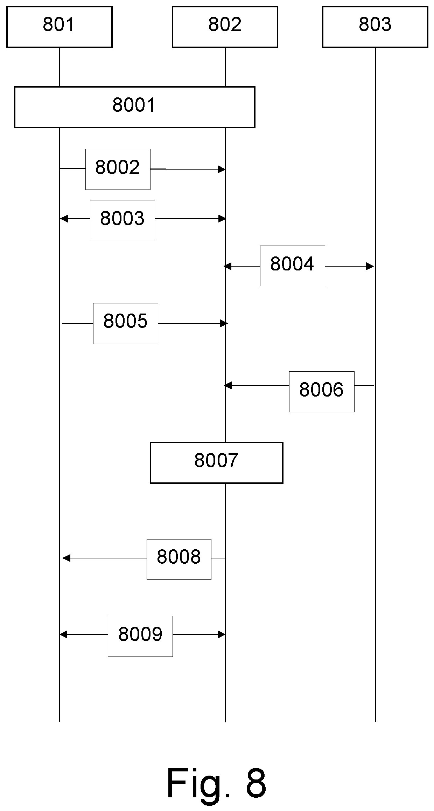

Where Figure 7 illustrated an example in which a UE switched from an sTRP mode of communication to an mTRP mode of communication, Figure 8 illustrates an example in which the UE switches from an mTRP mode of communication to an sTRP mode of communication.

Figure 8 illustrates signalling that may be performed between a first TRP 801, a UE 802, and a second TRP 803.

During 8001, the UE 802 is in a radio resource control (RRC) Connected state with the first TRP 801.

During 8002, the first TRP 801 signals the UE 802. This signalling may comprise a configuration for configuring the UE for when to provide a report to the first TRP 801. For example, the signalling may comprise at least one beam management-related condition that, when fulfilled, causes the UE 802 to report information for switching to a single-transmission reception point, sTRP, mode of communication (involving only the first TRP) from a multi-transmission reception point, mTRP, mode of communication (involving both the first TRP and the second TRP), where the UE is currently in an mTRP mode.

The configuration may be analogous to that described above in relation to Figure 7, except that the reporting is for a different direction. In an example, the thresholds may be as described above in relation to Figure 7 (e.g., such that when measured value is at or below a threshold value, sTRP conditions are reported (e.g., single beams are reported), whereas when a measured value is above the threshold, mTRP conditions are reported. However, it is understood that separate thresholds may be configured for switching in different directions. This may be useful, for example, to prevent ping-pong effects between sTRP and mTRP modes in borderline cases.

During 8003, the UE 802 and the first TRP 801 exchange communications. This may be performed using the PDSCH and the PUSCH.

Further, during 8004, the UE 802 and the second TRP 803 exchange communications. This may be performed using the PDSCH and the PUSCH. Stated differently, during 8003 to 8004, the UE is in an mTRP mode of communication with the first and second TRPs.

During 8005, the first TRP 801 transmits to the UE 802. The signalling of this transmission may comprise at least one downlink reference signal. The downlink reference signal may comprise any type of reference signal. For example, this signalling may comprise at least one first channel state information (CSI) reference signal and/or a synchronisation signal burst.

During 8006, the second TRP 803 transmits to the UE 802. The signalling of this transmission may comprise at least one downlink reference signal. The downlink reference signal may comprise any type of reference signal. For example, this signalling may comprise at least one first channel state information (CSI) reference signal and/or a synchronisation signal burst.

During 8007, the UE 802 detects that at least one beam management-related condition of the configuration of 8002 has been fulfilled by measurements performed on the reference signals of 8005 to 8006. Based on this, the UE 802 determines to report information regarding these beams to the first TRP 801 during 8008.

During 8008, the UE 802 signals the first TRP 801. The signalling may comprise a report that indicates that the at least one beam management-related condition of 8007 was fulfilled. Stated differently, the signalling of 8008 indicates that the UE 802 would prefer to operate in an sTRP mode of communication than an mTRP mode of communication.

The signalling of 8008 may further indicate at least one beam on which the UE 802 would prefer to connect to the network. The at least one beam may be selected in an analogous method as that for selecting a beam pair. For example, the signalling of 8008 may comprise an identification of one or more beams, and an indication of at least one priority for each beam relative to the other beams.

During 8009, it is assumed that the first TRP 801 performed a beam management procedure in respect of the UE 802 such that the UE 802 is now operating in an sTRP mode of communication via a beam of the first TRP 801. For example, During 8009, the UE 802 and the first TRP 801 exchange communications. This may be performed using the PDSCH and the PUSCH.

In addition to the above examples of Figures 7 and 8, the UE may be configured to provide an indication in the report to the first TRP that indicates whether the UE prefers to use SDM or SFN or has no preference. The indication may be provided per beam and/or per beam pair. For example, the indication may indicate per beam and/or per beam pairs, a respective indication of whether SDM, SFN or either is preferred for use by the UE.

For example, the UE may estimate (e.g., as part of a signal quality metric determination mentioned above in relation to Figures 7 and 8), a power corresponding to each beam and/or beam pair, and make a selection of SDM, SFN, or either for that beam and/or beam pair based on that measurement.

In more detail:
(i) When beams are to be reported, an interference level may be determined between the reported beam and the current beam.
(ii) When beam pairs are to be reported, an interference level between the two reported beams of that same beam pair.

In either of (i) and (ii) when the interference level is below a 1^{st} threshold, then the UE suggests SDM in the report for that beam and/or beam pair. Analogously, when the interference level is above a 2^{nd} threshold (with the 2^{nd} threshold being greater than the 1^{st} threshold), then the UE suggests SFN in the report for that beam and/or beam pair.

Further, when the interference level is between 1^{st} and 2^{nd} threshold, then the UE suggests that both SDM and SFN can be used.

Subsequently, the UE creates the report to be provided to the first TRP in such a way that, for each beam and/or beam pair comprised in the report, the UE comprises both a signal quality metric (e.g., RSRP) and an SDM/SFN indication. The UE then transmits the beam report to the first TRP. The first TRP may, subsequent to selecting a beam and/or a beam pair if the UE is to switch between an sTRP and mTRP connection mode, cause the UE to use the beam using the corresponding mode of communication indicated for that beam and/or beam pair.

It is understood that although RSRP is mentioned herein, other signal quality metrics may be used instead of RSRP. For example, signal-to-interference and noise ratio (SINR) may be used in place of any reference to RSRP.

The present subject matter may comprise the following clauses.

Clause 1. An apparatus, the apparatus comprising means for: reporting, to a network access node, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

Clause 2. An apparatus of clause 1, further comprising means for obtaining, from the network access node, a configuration for event-based reporting, wherein the configuration comprises the at least one beam management-related condition.

Clause 3. An apparatus of clause 2, wherein the configuration further comprises an indication of information that is to be comprised in the report.

Clause 4. An apparatus of clause 3, wherein the indication of information that is to be comprised in the report indicates that at least one of the following is to be comprised in the report: information corresponding to L beams and/or beam pairs; an indication indicating whether, for each of L beams and/or beam pairs, a spatial division multiplexing mode of communication and/or a signal frequency network mode of communication is preferred by the apparatus; an indication of whether the L beams and/or beam pairs are for uplink and/or downlink; or an indication of specific beam identifiers for L beams and/or beam pairs.

Clause 5. An apparatus of any preceding clause, further comprising means for selecting between the first and second transmission modes for providing said indication based on at least one of: a traffic class of traffic to be transmitted between the apparatus and the network access node, at least one signal quality metric condition to be fulfilled by traffic to be transmitted between the apparatus and the network, at least one determined interference level of a channel between the apparatus and at least one transmission reception point of the mTRP transmission mode; or at least one estimated future interference level of a channel between the apparatus and at least one transmission reception point of the mTRP transmission mode.

Clause 6. An apparatus of any preceding clause, further comprising means for: subsequent to the reporting, obtaining, from the network access node, an instruction to switch between a single transmission reception point, sTRP, mode of communication and the mTRP mode of communication; and performing said switch between the sTRP mode of communication and the mTRP mode of communication.

Clause 7. An apparatus of any preceding clause, further comprising means for providing, to the network access node, an indication of a capability to indicate a preference of the apparatus for performing a spatial division multiplexing mode of communication and/or a signal frequency network mode of communication.

Clause 8. An apparatus comprising means for: obtaining, from a user equipment, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

Clause 9. An apparatus of clause 8, further comprising means for providing, to the user equipment prior to receiving said report, a configuration for event-based reporting, wherein the configuration comprises the at least one beam management-related condition.

Clause 10. An apparatus of clause 9, wherein the configuration further comprises an indication of information that is to be comprised in the report.

Clause 11. An apparatus of clause 10, wherein the indication of information that is to be comprised in the report indicates that at least one of the following is to be comprised in the report: information corresponding to L beams and/or beam pairs; an indication indicating whether, for each of L beams and/or beam pairs, a spatial division multiplexing mode of communication and/or a signal frequency network mode of communication is preferred by the user equipment; an indication of whether the L beams and/or beam pairs are for uplink and/or downlink; or an indication of specific beam identifiers for L beams and/or beam pairs.

Clause 12. An apparatus of any of clauses 8 to 11, further comprising means for: determining to cause the user equipment to switch between the sTRP mode of communication and the mTRP mode of communication based on the report; and providing, to the user equipment, an instruction to switch between the sTRP mode of communication and the mTRP mode of communication.

Clause 13. An apparatus of any of clauses 8 to 12, wherein the apparatus is configured to provide at least one beam for the sTRP mode of communication and/or the mTRP mode of communication.

Clause 14. An apparatus of any preceding clause, wherein the at least one beam management-related condition comprises at least one user equipment initiated beam management condition.

Clause 15. An apparatus of any preceding clause, wherein the first transmission mode is a spatial division multiplex division mode, and the second transmission mode is a single frequency network transmission mode.

Clause 16. An apparatus of any preceding clause, wherein the first transmission mode has a greater throughput than the second transmission mode, and/or the second transmission mode is more reliable than the first transmission mode.

Clause 17. An apparatus of clause any preceding clause, wherein the at least one beam management-related condition comprises a condition for switching from a single transmission reception point, sTRP, mode of communication to the mTRP mode of communication.

Clause 18. An apparatus of any preceding clause, wherein the at least one beam management-related condition comprises a condition for switching to a single transmission reception point, sTRP, mode of communication from the mTRP mode of communication.

Clause 19. An apparatus of any preceding clause, wherein the one or more conditions comprises respective values corresponding to at least one of the following parameters: a reference signal received power; a transmission rank of the apparatus according to clause 1 or any preceding clause when dependent on clause 1 and/or of the user equipment according to clause 8 or any preceding clause when dependent on clause 8; a maximum power reduction; or a relative power imbalance between two beams.

Clause 20. An apparatus of any preceding clause, wherein the report comprises one of the following indications: an indication that the at least one beam management-related condition has been met for switching between a single transmission reception point, sTRP, communication mode and the mTRP communication mode is for an uplink direction only; an indication that the at least one beam management-related condition has been met for switching between an sTRP communication mode and the mTRP communication mode is for a downlink direction only; or an indication that the at least one beam management-related condition has been met for switching between an sTRP communication mode and the mTRP communication mode is for both the uplink direction and downlink direction.

Clause 21. An apparatus of any preceding clause, wherein the report comprises at least one of the following indications: an indication that the apparatus according to clause 1 or any preceding clause when dependent on clause 1 and/or of the user equipment according to clause 8 or any preceding clause when dependent on clause 8 is able to simultaneously transmit, simultaneously receive, and/or simultaneously transmit and receive using M beams of a same transmission reception point; or an indication that the apparatus according to clause 1 or any preceding clause when dependent on clause 1 and/or of the user equipment according to clause 8 or any preceding clause when dependent on clause 8 is able to simultaneously transmit, simultaneously receive, and/or simultaneously transmit and receive using N beams of different transmission reception points.

Clause 22. An apparatus of clause 21, wherein: the indication that the apparatus according to clause 1 or any preceding clause when dependent on clause 1 and/or of the user equipment according to clause 8 or any preceding clause when dependent on clause 8 is able to simultaneously transmit, simultaneously receive, and/or simultaneously transmit and receive using M beams of a same transmission reception point identifies the M beams; and/or the indication that the apparatus according to clause 1 or any preceding clause when dependent on clause 1 and/or of the user equipment according to clause 8 or any preceding clause when dependent on clause 8 is able to simultaneously transmit, simultaneously receive, and/or simultaneously transmit and receive using N beams of different transmission reception points identifies the N beams.

Clause 23. A method comprising: reporting, to a network access node, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

Clause 24. A computer program comprising instructions which, when the program is executed by a computer of an apparatus, cause the apparatus to carry out: reporting, to a network access node, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used herein, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Various example embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various example embodiments of the disclosure is set out by the independent claims. The example embodiments and features thereof, if any, described in this disclosure that do not fall under the scope of the independent claims are to be interpreted as examples useful for understanding various example embodiments of the disclosure.

The foregoing description has provided, by way of non-limiting and illustrative examples, a full and informative description of the various example embodiments of this disclosure. However, various modifications and adaptations may become apparent to those skilled in the relevant arts in view of the foregoing description, when read in conjunction with the accompanying drawings and the claims. However, all such and similar modifications of the teachings will still fall within the various example embodiments of the disclosure as set forth in the claims. By way of non-limiting and illustrative example, there is a further example embodiment comprising a combination of one or more example embodiments with any of the other example embodiments previously discussed.

## Claims

1. An apparatus, the apparatus comprising means for:
reporting, to a network access node, a report indicating that the apparatus has detected that at least one beam management-related condition has been met for a multi-transmission reception point, **mTRP,** mode of communication, wherein the report comprises an indication that indicates whether a first transmission mode or a second transmission mode is preferred for said modes of communication.

2. An apparatus as claimed in claim 1, further comprising means for obtaining, from the network access node, a configuration for event-based reporting, wherein the configuration comprises the at least one beam management-related condition.

3. An apparatus as claimed in claim 2, wherein the configuration further comprises an indication of information that is to be comprised in the report.

4. An apparatus as claimed in claim 3, wherein the indication of information that is to be comprised in the report indicates that at least one of the following is to be comprised in the report:
information corresponding to L beams and/or beam pairs;
an indication indicating whether, for each of L beams and/or beam pairs, a spatial division multiplexing mode of communication and/or a signal frequency network mode of communication is preferred by the apparatus;
an indication of whether the L beams and/or beam pairs are for uplink and/or downlink; or
an indication of specific beam identifiers for L beams and/or beam pairs.

5. An apparatus as claimed in any preceding claim, further comprising means for selecting between the first and second transmission modes for providing said indication based on at least one of: a traffic class of traffic to be transmitted between the apparatus and the network access node, at least one signal quality metric condition to be fulfilled by traffic to be transmitted between the apparatus and the network, at least one determined interference level of a channel between the apparatus and at least one transmission reception point of the mTRP transmission mode; or at least one estimated future interference level of a channel between the apparatus and at least one transmission reception point of the mTRP transmission mode.

6. An apparatus as claimed in any preceding claim, further comprising means for:
subsequent to the reporting, obtaining, from the network access node, an instruction to switch between a single transmission reception point, sTRP, mode of communication and the mTRP mode of communication; and
performing said switch between the sTRP mode of communication and the mTRP mode of communication.

7. An apparatus as claimed in any preceding claim, further comprising means for providing, to the network access node, an indication of a capability to indicate a preference of the apparatus for performing a spatial division multiplexing mode of communication and/or a signal frequency network mode of communication.

8. An apparatus comprising means for:
obtaining, from a user equipment, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

9. An apparatus as claimed in any preceding claim, wherein the at least one beam management-related condition comprises at least one user equipment initiated beam management condition and/or a condition for switching from a single transmission reception point, sTRP, mode of communication to the mTRP mode of communication and/or a condition for switching to a single transmission reception point, sTRP, mode of communication from the mTRP mode of communication.

10. An apparatus a claimed in any preceding claim, wherein the first transmission mode is a spatial division multiplex division mode, and the second transmission mode is a single frequency network transmission mode.

11. An apparatus as claimed in any preceding claim, wherein the first transmission mode has a greater throughput than the second transmission mode, and/or the second transmission mode is more reliable than the first transmission mode.

12. An apparatus as claimed in any preceding claim, wherein the report comprises one of the following indications:
an indication that the at least one beam management-related condition has been met for switching between a single transmission reception point, sTRP, communication mode and the mTRP communication mode is for an uplink direction only;
an indication that the at least one beam management-related condition has been met for switching between an sTRP communication mode and the mTRP communication mode is for a downlink direction only; or
an indication that the at least one beam management-related condition has been met for switching between an sTRP communication mode and the mTRP communication mode is for both the uplink direction and downlink direction.

13. An apparatus as claimed in any preceding claim, wherein the report comprises at least one of the following indications:
an indication that the apparatus according to claim 1 or any preceding claim when dependent on claim 1 and/or of the user equipment according to claim 8 or any preceding claim when dependent on claim 8 is able to simultaneously transmit, simultaneously receive, and/or simultaneously transmit and receive using M beams of a same transmission reception point; or
an indication that the apparatus according to claim 1 or any preceding claim when dependent on claim 1 and/or of the user equipment according to claim 8 or any preceding claim when dependent on claim 8 is able to simultaneously transmit, simultaneously receive, and/or simultaneously transmit and receive using N beams of different transmission reception points.

14. A method comprising:
reporting, to a network access node, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.

15. A computer program comprising instructions which, when the program is executed by a computer of an apparatus, cause the apparatus to carry out:
reporting, to a network access node, a report indicating that the apparatus has detected that at least one beam management-related condition has been met for a multi-transmission reception point, mTRP, mode of communication, wherein the report comprises an indication that indicates whether a first transmission mode or a second transmission mode is preferred for said modes of communication.
